Europäisches Patentamt

European Patent Office

Office européen des brevets

(11) Veröffentlichungsnummer: **0 283 548**
**A1**

## EUROPÄISCHE PATENTANMELDUNG

(21) Anmeldenummer: 87107009.0

(22) Anmeldetag: 14.05.87

(51) Int. Cl.⁴: **B23Q 1/14 , F15B 15/06**

(30) Priorität: 24.03.87 DE 3709616

(43) Veröffentlichungstag der Anmeldung:
28.09.88 Patentblatt 88/39

(84) Benannte Vertragsstaaten:
**AT BE CH DE ES FR GB GR IT LI LU NL SE**

(71) Anmelder: **PROMA Produkt- und Marketing Gesellschaft m.b.H.**
**Beethovenstrasse 75**
**D-7310 Plochingen(DE)**

(72) Erfinder: **Lipinski, Reinhard**
**Beethovenstrasse 75**
**D-7310 Plochingen(DE)**
Erfinder: **Kaiser, Siegmund H.**
**Grünewaldstrasse 47**
**D-7440 Nürtingen(DE)**

(74) Vertreter: **Rüger, Rudolf, Dr.-Ing. et al**
**Webergasse 3 Postfach 348**
**D-7300 Esslingen/Neckar(DE)**

(54) **Lineare Stellvorrichtung.**

(57) Eine lineare Stellvorrichtung weist eine Längsführung, wenigstens einen auf dieser längsverschieblich gelagerten Schlitten (12) und eine eine Linearbewegung wenigstens eines Antriebsgliedes erzeugende Antriebsquelle (1) auf, deren angetriebenes Antriebsglied mit dem Schlitten gekuppelt ist.

Um ohne zusätzliche Antriebsquelle wahlweise auch eine rotative Stellbewegung zu erzeugen, ist auf der Längsführung (11) wenigstens ein Schlitten mit einem auf ihm um eine schlittenfeste Achse (17) drehbar gelagerten Antriebselement (16) angeordnet, dem Einrichtungen (19) zur Abnahme einer Drehbewegung zugeordnet sind. Das Antriebselement ist mit dem Antriebsglied (21) der linearen Antriebsquelle über ein ihm in Abhängigkeit von der Linearbewegung des Antriebsgliedes eine Drehbewegung um seine Achse erteilenden Getriebe (20, 24) gekuppelt, während dem Schlitten wahlweise betätigbare Mittel (27, 30, 31) zugeordnet sind, durch die der Schlitten bei angetriebenem Antriebselement gegenüber der Längsführung oder das Antriebselement bei angetriebenem Schlitten gegenüber dem Schlitten jeweils orts- bzw. drehfest verriegelbar ist.

*Fig. 1*

## Lineare Stellvorrichtung

Die Erfindung betrifft eine lineare Stellvorrichtung mit einer Längsführung, wenigstens einem auf dieser längsverschieblich gelagerten Schlitten und einer eine Linearbewegung wenigstens eines Antriebsgliedes erzeugenden Antriebsquelle, deren angetriebenes Antriebsglied mit dem Schlitten gekuppelt ist.

Lineare Stellvorrichtungen, häufig auch als mechanische Lineareinheit oder lineare Transporteinheit bezeichnet, finden in der Technik auf den verschiedensten Anwendungsgebieten immer dann Anwendung, wenn es gilt, zur entsprechenden Verstellung oder Bewegung eines angetriebenen Elementes eine begrenzte Linearbewegung zu erzeugen. Eine solche Stellvorrichtung in Gestalt eines Druckmittelzylinders ist bspw. in der DE-PS 31 24 878 beschrieben. Dieser Druckmittelzylinder ist mit einem endseitig verschlossenen, längsgeschlitzten Zylinderrohr ausgebildet, in dem ein abgedichteter Kolben längsverschieblich geführt ist, der ein durch den Längsschlitz nach außen ragendes Kraftübertragungselement trägt, wobei der Längsschlitz des Zylinderrohrs in Zylinderlängsrichtung beidseitig des Kolbens durch ein im Zylinderrohrinneren angeordnetes, unter dem Kraftübertragungselement hindurchgeführtes sowie in Anlage an die Zylinderrohrinnenwand gehaltenes Dichtband abgedichtet ist. Auf der Zylinderrohraußenseite ist ein zugeordnetes Abdeckband vorgesehen.

Bei einem ähnlichen aus der DE-PS 31 24 915 bekannten Druckmittelzylinder mit einem längsgeschlitzten, endseitig verschlossenen Zylinderrohr sind unmittelbar auf der Außenseite des Zylinderrohrs Führungsbahnen angeordnet, auf denen ein mit dem Kraftübertragungselement gekuppeltes Führungsteil nach Art eines Schlittens längsverschieblich geführt ist. Die zu beiden Seiten des Längsschlitzes des Zylinderrohres angeordneten parallelen Führungsbahnen bilden dabei eine Parallelführung.

Bei einem aus der US-PS 2473 430 bekannten vergleichbaren Druckmittelzylinder mit längsgeschlitztem Zylinderrohr ist die Anordnung demgegenüber derart getroffen, daß mit den das Zylinderrohr endseitig verschließenden Flanschen beidseitig des Zylinderrohres liegende und parallel zu diesem ausgerichtete Führungsstangen verbunden sind, auf denen ein mit dem Kraftübertragungselement gekuppeltes Maschinenelement längsverschieblich geführt ist.

Weitere Beispiele für solche mechanischen Lineareinheiten sind sogenannte Bandzylinder, bei denen im Inneren eines einen längsverschieblichen Kolben enthaltenden Zylinderrohres ein beidseitig an dem Zylinder befestigtes Zugmittel angeordnet ist, das durch die Endflanschen des Zylinderrohres abgedichtet nach außen und über Umlenkrollen an der Zylinderaußenseite entlanggeführt ist, wo es mit dem verschieblich geführten Antriebsglied gekoppelt ist.

Schließlich sind auch mechanische Lineareinheiten bekannt (EP-A-0086 885), bei denen in einem formstabilen länglichen Gehäuse ein Spindeltrieb angeordnet ist, dessen Gewindespindel in dem Gehäuse drehbar gelagert und mit einer Antriebsquelle kuppelbar ist. Dabei ist das durch wenigstens eine Spindelmutter des Spindeltriebes angetriebene Kraftübertragungselement durch einen Längsschlitz des Gehäuses nach außen ragend angeordnet und an dem Gehäuse längsgeführt.

Allen diesen mechanischen Lineareinheiten ist gemeinsam, daß sie lediglich eine Linearbewegung ihres Antriebsgliedes oder des damit gekuppelten Maschinenelementes erzeugen können. Muß aber diesem von der linearen Stellvorrichtung eine Linearbewegung erteiltem Maschinenelement zusätzlich eine Drehbewegung erteilt werden, muß zu diesem Zwecke eine eigene weitere Antriebsquelle vorgesehen werden.

Ein Beispiel für eine mechanische Linearantriebseinheit mit mehreren Antriebsquellen ist aus der EP-A-1193 749 bekannt. Diese Einheit weist eine oder mehrere koaxiale Gewindespindeln auf, die in einem länglichen Gehäuse angeordnet und mit Antriebsquellen gekuppelt sind. Die durch einen Längsschlitz des Gehäuses ragenden Kraftübertragungselemente, die jeweils mit einer Spindelmutter gekuppelt sind, tragen ihrerseits Antriebsquellen und mit der Spindelmutter zusammenwirkende Getriebe. Auf diese Weise läßt sich durch entsprechende Ansteuerung der einzelnen Antriebsquellen zwar eine Vielzahl unterschiedlicher Stellbewegungen erzielen, doch handelt es sich hierbei immer um Linearbewegungen.

Bei Robotern, Handlings-Geräten, Maschinenverkettungen, Teile-oder Werkzeugzuführeinrichtungen für Maschinen, Lagerhaltungsgeräten usf. besteht aber häufig ein Bedürfnis nach einer Stellvorrichtung, die es gestattet, ein Element in einer linearen Transportbewegung an einen bestimmten Ort zu transportieren und ihm an dem Bestimmungsort sodann eine Drehbewegung über einen vorbestimmten Drehwinkel um eine feste Achse zu erteilen, etwa um ein von dem Element ergriffenes oder von diesem mitgeführtes Teil abzulegen oder aufzunehmen.

Aufgabe der Erfindung ist es deshalb, eine lineare Stellvorrichtung mit einer eine lineare Stellbewegung des angetriebenen Schlittens oder allgemeinen Teiles längs einer vorgegebenen Führungsbahn erzeugenden linearen Antriebsquelle zu schaffen, die es bei einfachem Aufbau ohne zusätzliche Antriebsquelle gestattet, wahlweise auch eine rotative Stellbewegung zu erzeugen.

Zur Lösung dieser Aufgabe ist die eingangs genannte lineare Stellvorrichtung erfindungsgemäß dadurch gekennzeichnet, daß auf der Längsführung wenigstens ein Schlitten mit einem auf ihm um eine schlittenfeste Achse drehbar gelagerten Antriebselement angeordnet ist, dem Einrichtungen zur Abnahme einer Drehbewegung zugeordnet sind, daß das Antriebselement mit dem Antriebsglied der linearen Antriebsquelle über ein ihm in Abhängigkeit von der Linearbewegung des Antriebsgliedes eine Drehbewegung um seine Achse erteilende Getriebe gekuppelt ist und daß dem Schlitten wahlweise betätigbare Mittel zugeordnet sind, durch die der Schlitten bei angetriebenem Antriebselement gegenüber der Längsführung oder das Antriebselement bei angetriebenem Schlitten gegenüber dem Schlitten jeweils orts-bzw. drehfest verriegelbar ist.

Mit dieser Stellvorrichtung kann somit das auf dem Schlitten drehbar gelagerte Antriebselement - zusammen mit dem mit ihm gekuppelten und von ihm angetriebenen Maschinenelement etc. - längs der Längsführung beliebig linear bewegt und sodann an einem frei wählbaren Ort rotativ verstellt werden, ohne daß dazu außer der linearen Antriebsquelle des Schlittens eine zusätzliche Antriebsquelle erforderlich wäre. Diese Stellvorrichtung gestattet es bspw., mit einer einzigen solchen Linear-Dreh-Einheit etwa in einer Fertigungsstraße mehrere im Abstand nebeneinanderliegende Arbeitsstationen linear anzufahren und sodann durch eine entsprechende rotative Stellbewegung des angetriebenen Elementes zu bedienen. Der Schlitten kann auch zwischen mehreren Arbeitsstationen linear hin-und herfahren; das Antriebselement kann wahlweise in beiden Drehrichtungen um 360°oder 720° oder in einem Kreissektorbereich gedreht werden. Der Schlitten kann ortsfest gehalten werden bei sich drehendem Antriebselement; das Antriebselement kann bezüglich des Schlittens unverdrehbar sein, während der Schlitten linear verfahren wird, und schließlich kann sich das Antriebselement auch drehen, während der Schlitten seine Längsbewegungausführt.

In einer bevorzugten Ausführung ist die Längsführung mit der Antriebsquelle,zumindest einem Schlitten sowie zumindest einem Getriebe, zu einer selbständigen Baueinheit vereinigt, die entsprechend dem jeweiligen Einsatzzweck eingebaut und verwendet werden kann. Dabei kann die Längsführung Teil eines Rahmens sein, in dem die Antriebsquelle aufgenommen ist, doch sind auch andere konstruktive Lösungen der baueinheitlichen Zusammenfassung der erwähnten Elemente der linearen Stellvorrichtung denkbar.

Der Rahmen kann mit Vorteil zwei längliche Führungsbahnen und diese endseitig verbindende Querjoche aufweisen, wobei dann die Antriebsquelle in dem Bereich zwischen den Führungsbahnen liegend an den Querjochen gehaltert ist. Bei der erwähnten Baueinheit ergeben sich besonders einfache Verhältnisse dann, wenn die Längsführung zumindest teilweise auf Gehäuseteilen der Antriebsquelle ausgebildet ist.

Die Antriebsquelle selbst kann wenigstens eine fluidbetätigte lineare Transporteinheit (Lineareinheit) mit einem in einem länglichen Gehäuse verschieblichen und mit dem Antriebsglied gekoppelten Kolben aufweisen, wie sie eingangs zum Stand der Technik in verschiedenen Ausführungsformen mit geschlitztem und ungeschlitztem Zylindergehäuse erläutert wurden. In einer anderen Ausführungsform kann die Antriebsquelle aber auch wenigstens eine motorisch angetriebene lineare Transporteinheit (mechanische Lineareinheit) mit zumindest einer drehbar gelagerten und mit einem Antriebsmotor gekuppelten Spindel eines Spindeltriebes aufweisen, dessen Spindelmutter mit dem Antriebsglied gekoppelt ist. Dabei kann der Spindeltrieb zweckmäßigerweise in einem ihn umschließenden länglichen Gehäuse angeordnet sein, so daß die Antriebsquelle eben durch wenigstens eine mechanische Linear-Baueinheit gebildet ist, wie sie ebenfalls eingangs erwähnt wurde. Anstelle eines solchen Gehäuses kann für die Spindel aber auch eine Schutzabdeckung treten, wie sie bspw. in der EP-B1-0084 5 5 beschrieben ist.

Abhängig von der Art des verwendeten Getriebes, kann die Antriebsquelle mit einem oder mit zwei linearen Transportmitteln der erwähnten Art ausgebildet sein. So kann in einer zweckmäßigen Ausführungsform die Antriebsquelle zwei selbständige lineare Transportmittel mit jeweils einem eigenen Antriebsglied aufweisen, wobei der Schlitten ein an ihm gelagertes Antriebsrad für das Antriebselement trägt und die beiden linearen Transportmittel beidseitig des Antriebsrades parallel zueinander angeordnet sind. Ihre Antriebsglieder sind mittels jeweils eines Getriebes mit dem Antriebsrade gekuppelt.

Das Getriebe kann als Zahnstangengetriebe ausgebildet sein, das eine mit dem Antriebsglied der Antriebsquelle verbundene Zahnstange und ein auf dem Schlitten gelagertes und mit dem Antriebselement verbundenes oder gekuppeltes Ritzel aufweist, das durch die Zahnstange in Umdrehung versetzbar ist. Ein solches Zahnstangengetriebe kann wahlweise mit einer Antriebsquelle, die lediglich ein einziges lineares Transportmittel aufweist, oder mit einer Antriebsquelle, die über zwei lineare Transportmittel verfügt, verwendet werden.

Bei einer anderen, besonders vorteilhaften Ausführungsform der erwähnten Art, bei der die Antriebsquelle zwei lineare Transportmittel aufweist, kann die Anordnung derart getroffen sein, daß jedes Getriebe ein Zugmittelgetriebe mit einem das Antriebsrad zumindest teilweise umschlingenden und mit diesem gekuppelten biegsamen Zugmittel ist, wobei die das Antriebsrad im entgegengesetzten Sinne umschlingenden Zugmittel endseitig an den beiden Antriebsgliedern verankert sind.

Das Zugmittel kann ein Zahnriemen sein, dessen Verzahnung mit einer entsprechenden Verzahnung des Antriebsrades in Eingriff steht, doch können auch Riemen, Seile und andere biegsame längliche Elemente Verwendung finden, die mit dem Antriebsrad reib-oder formschlüssig gekuppelt sind. Zweckmäßig ist es, wenn jedes Zugmittel zumindest im Bereiche des Antriebsgliedes durch eine seitliche Führung abgestützt ist.

Insbesondere bei den Ausführungsformen, bei denen die Antriebsquelle des Schlittens lediglich ein lineares Transportmittel aufweist, ist es in der Regel vorteilhaft, wenn dem Schlitten wahlweise betätigbare Bremsmittel zugeordnet sind, durch die das Antriebselement bezüglich des Schlittens und/oder der Schlitten bezüglich der Längsführung feststellbar oder abbremsbar ist. Die Bremsmittel können eine reib-oder formschlüssige Bremse aufweisen.

In der Zeichnung sind Ausführungsbeispiele des Gegenstandes der Erfindung dargestellt. Es zeigen:

Fig. 1 eine lineare Stellvorrichtung gemäß der Erfindung in perspektivischer Teildarstellung, teilweise aufgeschnitten,

Fig. 2 die beiden Antriebsglieder der linearen Antriebsquelle der Stellvorrichtung nach Fig. 1 mit den zugeordneten Zugmittelgetrieben, in einer perspektivischen Prinzipdarstellung und in einem anderen Maßstab,

Fig. 3 eine lineare Stellvorrichtung gemäß der Erfindung in einer abgewandelten Ausführungsform, ähnlich jener nach Fig. 1, in einer Draufsicht auf die Unterseite des Schlittens und

Fig. 4 bis 8 lineare Stellvorrichtungen gemäß der Erfindung in weiteren abgewandelten Ausführungsformen, jeweils in einer schematischen Darstellung entsprechend Fig. 3.

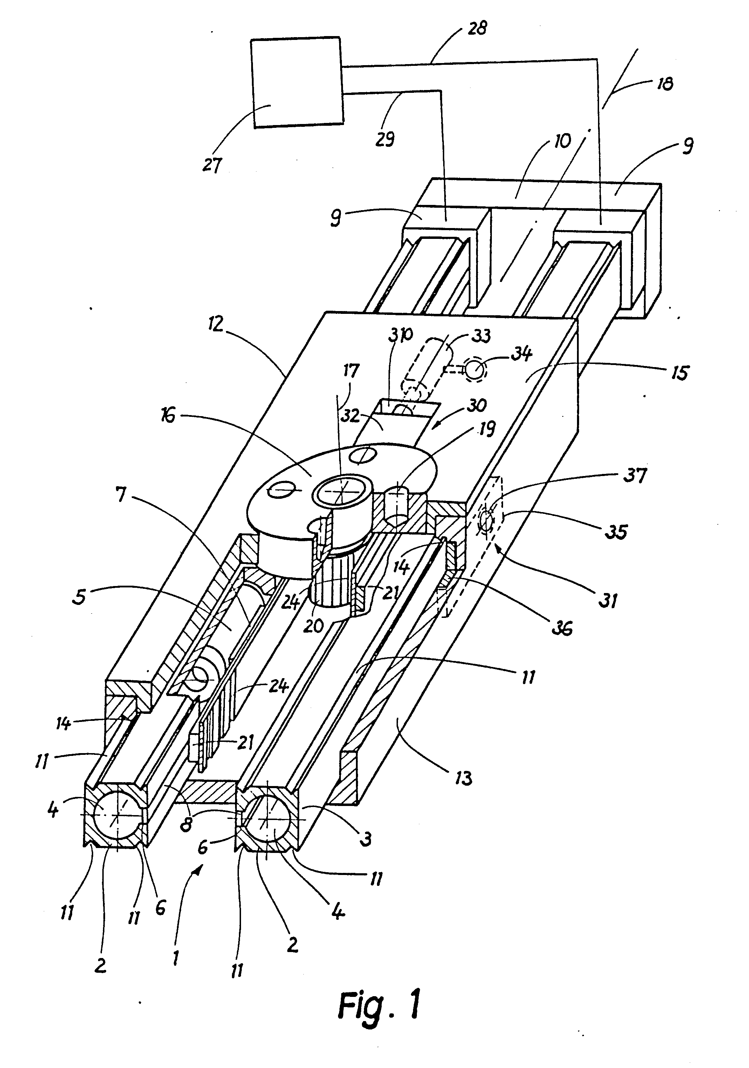

Die in Fig. 1 dargestellte lineare Stellvorrichtung weist eine eine Linearbewegung erzeugende Antriebsquelle 1 auf, die aus zwei fluidbetätigten linearen Transporteinheiten in Gestalt zweier Druckmittelzylinder 2 besteht. Jeder der beiden Druckmittelzylinder 2 ist grundsätzlich in der aus der DE-PS 31 24 915 bekannten Weise aufgebaut. Er verfügt über ein längliches, im Querschnitt im wesentlichen rechteckiges Gehäuse 3, das beispielsweise aus Leichtmetall stranggepreßt ist und eine Zylinderbohrung 4 enthält, in der ein abgedichteter Kolben 5 längsverschieblich gelagert ist. Im Bereiche einer Seitenwand ist das Gehäuse 3 mit einem in die Zylinderbohrung 4 führenden achsparallelen Längsschlitz 6 versehen, durch den ein mit dem Kolben 5 verbundenes stegartiges Kraftübertragungselement 7 nach außen ragt. Beidseitig des Kraftübertragungselementes 7 ist der Längsschlitz 6 durch ein elastisches Dichtband 8 verschlossen, wie dies im einzelnen in der DE-PS 31 24 915 erläutert ist, auf die wegen der Einzelheiten hiermit Bezug genommen wird.

Endseitig sind die beiden Gehäuse 3 jeweils durch Endflansche 9 abgedichtet verschlossen, in denen die nicht weiter dargestellten Einrichtungen zur Zu-und Ableitung des Fluids in die Zylinderbohrung 4 enthalten sind.

Die beiden linearen Transporteinheiten 2 sind achsparallel im Abstand nebeneinander derart angeordnet, daß ihre Längsschlitze 6 aufeinander zu weisen. Ihre Endflansche 9 sind jeweils durch ein starres Querjoch 10 miteinander verbunden, von denen eines in Fig. 1 dargestellt ist. Dadurch ist ein starrer Rahmen ausgebildet, der aus den Querjochen 10 und den Gehäusen 3 der Transporteinheiten 2 besteht.

Auf der Außenseite der Gehäuse 3 sind jeweils paarweise einander zugeordnete achsparallele Führungsbahnen 11 ausgebildet, welche eine Längsführung für einen auf die Gehäuse 3 unmittelbar aufgesetzten Schlitten 12 bilden.

Der Schlitten 12, der in Fig. 1 lediglich - schematisch veranschaulicht ist, weist ein die beiden Gehäuse 3 teilweise umfassendes Unterteil 13 von im wesentlichen C-förmiger Querschnittsgestalt auf, das mit Führungsleisten 14 in zugeordneten Führungsbahnen 11 der Gehäuse 3 längsverschieblich gelagert ist. In das Unterteil 13 ist ein im wesentlichen ebenes Oberteil 15 eingesetzt, das mit dem Unterteil 13 beispielsweise verschraubt ist und mit diesem ein Gehäuse bildet. In dem Oberteil 15 ist ein in Gestalt einer kreiszylindrischen Scheibe 16 ausgebildetes Antriebselement um eine bei 17 angedeutete aufrechtstehende schlittenfeste Drehachse drehbar gelagert. Die Drehachse 17 verläuft rechtwinklig zu der mit 18 bezeichneten Längsmittelachse der Stellvorrichtung 1. Die Scheibe 16 ist mit achsparallelen Bohrungen 19 versehen, die den Anschluß eines nicht weiter dargestellten anzutreibenden Maschinenelementes etc. gestatten und deshalb Einrichtungen zur Abnahme einer Drehbewegung von der Scheibe 16 bilden.

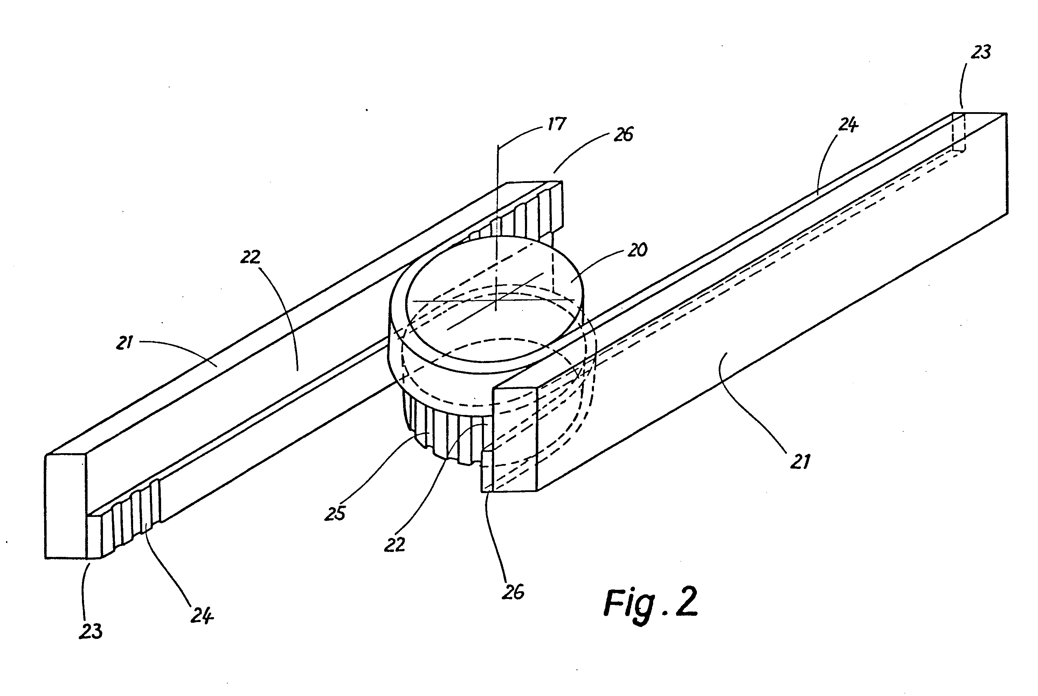

Mit der Scheibe 16 ist ein koaxiales zylindrisches Antriebsrad 20 drehfest verbunden, das in den Raum zwischen den beiden Transporteinheiten 2 ragt und im Abstand seitlich neben dem Längsschlitz 6 steht. Über dieses Antriebsrad 20 ist der Schlitten 12 mit den beiden Kolben 5 der zwei Transporteinheiten 2 gekuppelt, wozu Zugmittelgetriebe vorgesehen sind, deren Aufbau sich im einzelnen aus Fig. 2 ergibt:

Mit dem durch den Längssteg 6 ragenden Kraftübertragungselement 7 jeder der beiden Transporteinheiten 2 ist ein achssparallel ausgerichtetes, längliches, leistenförmiges Antriebselement 21 starr verbunden, dessen dem Antriebsrad 20 zugewandte ebene Seitenfläche 22 parallel zu der entsprechenden Seitenfläche 22 des jeweils gegenüberliegenden Antriebselementes 21 ausgerichtet ist. An jedem der Antriebselemente 21 ist im Bereiche der Seiten-oder der Abstützfläche 22 einenends bei 23 ein biegsames Zugmittel in Gestalt eines Zahnriemens 24 verankert, das das mit einer entsprechenden Verzahnung 25 versehene Antriebsrad 20 um 180° umschlingt und an seinem anderen Ende an dem jeweils gegenüberliegenden Antriebsglied 21 an einer der Befestigungsstelle 23 gegenüberliegenden Befestigungsstelle 26 befestigt ist, d.h. jeder Zahnriemen 24 läuft U-förmig um das Antriebsrad 20, wobei sich die U-förmigen Schlingen zu entgegengesetzten Seiten öffnen.

Wie aus Fig. 2 zu entnehmen, umschlingen die beiden in Richtung der Achse 17 nebeneinanderliegenden Zahnriemen 24, bezogen auf ein Antriebsglied 21, das Antriebsrad 20 im entgegengesetzten Sinne auf bezüglich der Achse 17 gegenüberliegenden Seiten des Antriebsrades 20, so daß bei einer linearen Hin-und Herbewegung der beiden linear beweglich geführten Antriebsglieder 21 das Antriebsrad 20 und damit die das Antriebselement 16 bildende Scheibe 16 in dem einen oder dem anderen Drehsinn verdreht wird.

Durch die erläuterte Anordnung der Zahnriemen 24 ist gewährleistet, daß die am Umfang des Antriebsrades 20 angreifende, die Drehbewegung hervorrufende Kraft immer durch ein auf Zug beanspruchtes Trum eines Zahnriemens 24 übertragen wird. Die Zahnriemen 24 sind dabei bei dieser Kraftübertragung durch die Auflageflächen 22 der Kraftübertragungsglieder 21 nach außen zu seitlich abgestützt, womit gewährleistet ist, daß die Zahnriemen 24 mit ihrer Verzahnung sicher in die Verzahnung 25 des Antriebsrades 20 einlaufen und in dieser in Eingriff gehalten werden.

Die insoweit beschriebene Stellvorrichtung arbeitet wie folgt: Über eine in Fig. 1 bei 27 angedeutete Steuer-und Versorgungseinheit 27 und Verbindungsleitungen 28, 29 können die Zylinderbohrungen 4 der beiden fluidbetätigten linearen Transporteinheiten 2 wahlweise mit Druckfluid, beispielsweise Druckluft, beaufschlagt werden, so daß ihre zugeordneten Kolben 5 eine entsprechende Linearbewegung ausführen, die auf das zugeordnete Antriebsglied 21 übertragen wird. Abhängig von der Druckfluidbeaufschlagung der beiden Transporteinheiten 2 können folgende Stellbewegungen erzeugt werden:

a) beide Antriebsglieder 21 bewegen sich mit gleicher Geschwindigkeit in der gleichen Richtung. Damit wird der Schlitten 12 mit der gleichen Geschwindigkeit auf den Führungsbahnen 11 linear bewegt; das durch die Scheibe 16 gebildete Antriebselement wird nicht in Umdrehung versetzt, sondern ist drehfest bezüglich des Schlittens 12 verriegelt;

b) die beiden Antriebsglieder 21 bewegen sich gegenläufig mit gleicher .Geschwindigkeit. Damit wird auf den Schlitten 12 keine resultierende Antriebskraft ausgeübt. Der Schlitten 12 wird ortsfest bezüglich der Führungsbahnen 11 gehalten, während die das Antriebselement bildende Scheibe 16 um ihre Drehachse 17 in Umdrehung versetzt wird. Der Drehwinkel, um den die Scheibe 16 verdreht wird, hängt von dem linearen Bewegungsweg der beiden Antriebsglieder 21 ab. Er kann beispielsweise 720°, 360° oder weniger betragen, d.h. das mit der Scheibe 16 verbundene Maschinenelement etc. kann über einen beliebigen Drehwinkel oder auch um eine begrenzte Zahl von Umdrehungen gedreht werden;

c) die beiden Antriebsglieder 21 werden mit unterschiedlicher Geschwindigkeit gleich oder gegensinnig bewegt oder eines der Antriebsglieder 21 wird ortsfest gehalten. In jedem dieser Fälle führt der Schlitten 12 eine lineare Verschiebebewegung aus, während das Antriebselement (Scheibe) 16 gleichzeitig um die Drehachse 17 in dem einen oder dem anderen Drehsinn verdreht wird. Durch entsprechende Wahl der Bewegungsrichtung und der Geschwindigkeit der beiden Antriebsglieder 21 können die Geschwindigkeit des Schlittens 12 und die Geschwindigkeit der Scheibe 16 sowie deren jeweilige Verstellwege zweckentsprechend eingestellt werden.

Ersichtlich kann der Schlitten 12 beispielsweise mit der Betriebsweise gemäß a) an eine beliebige Stelle längs der von den Führungsbahnen 11 gebildeten Längs führung bei drehfest gehaltener Scheibe 16 transportiert werden. Beim Eintreffen an dieser Stelle braucht lediglich die Beaufschlagung der beiden die Antriebsquelle bildenden linearen Transporteinheiten 2 entsprechend b) verändert zu werden, um bei ortsfest gehaltenem Schlitten 12 eine Drehbewegung der Scheibe 16 und des mit dieser verbundenen Maschinenelementes oder Greifers zu erzeugen. Die Stellvorrichtung bietet somit eine völlig freie Kombinationsmöglichkeit einer linearen und einer rotativen Antriebsbewegung für ein mit dem durch die Scheibe 16 gebildeten Antriebselement verbundenes Teil.

In dem Oberteil 15 und in wenigstens einer Seitenwand des Unterteils 13 des Schlittens 12 ist jeweils eine wahlweise betätigbare Reibungsbremse 30 bzw. 31 angeordnet. Die Reibungsbremse 30 weist einen schematisch veranschaulichten, in einer entsprechenden Führung 31 begrenzt längsverschieblich gelagerten Bremsklotz 32 auf, der auf den Umfang der Scheibe 16 einwirkt und durch einen bei 33 angedeuteten fluidbetätigten Zylinder angepreßt werden kann. Die Fluidzuführung ist mit 34 bezeichnet.

In ähnlicher Weise weist die andere Reibungsbremse 31 einen in einer entsprechenden Druckkammer 35 abgedichtet begrenzt beweglichen Bremsbacken 36 auf, der über einen Druckfluidanschluß 37 mit Druckfluid beaufschlagt werden kann und reibschlüssig mit der benachbarten ebenen Wand des zugeordneten Gehäuses 3 in Eingriff bringbar ist.

Die beiden Reibungsbremsen 30, 31 ermöglichen eine zusätzliche Verriegelung des Schlittens 12 bezüglich der Transporteinheit 2 bzw. der Scheibe 16 bezüglich des Schlittens 12. Auch formschlüssige Bremseinrichtungen wären denkbar.

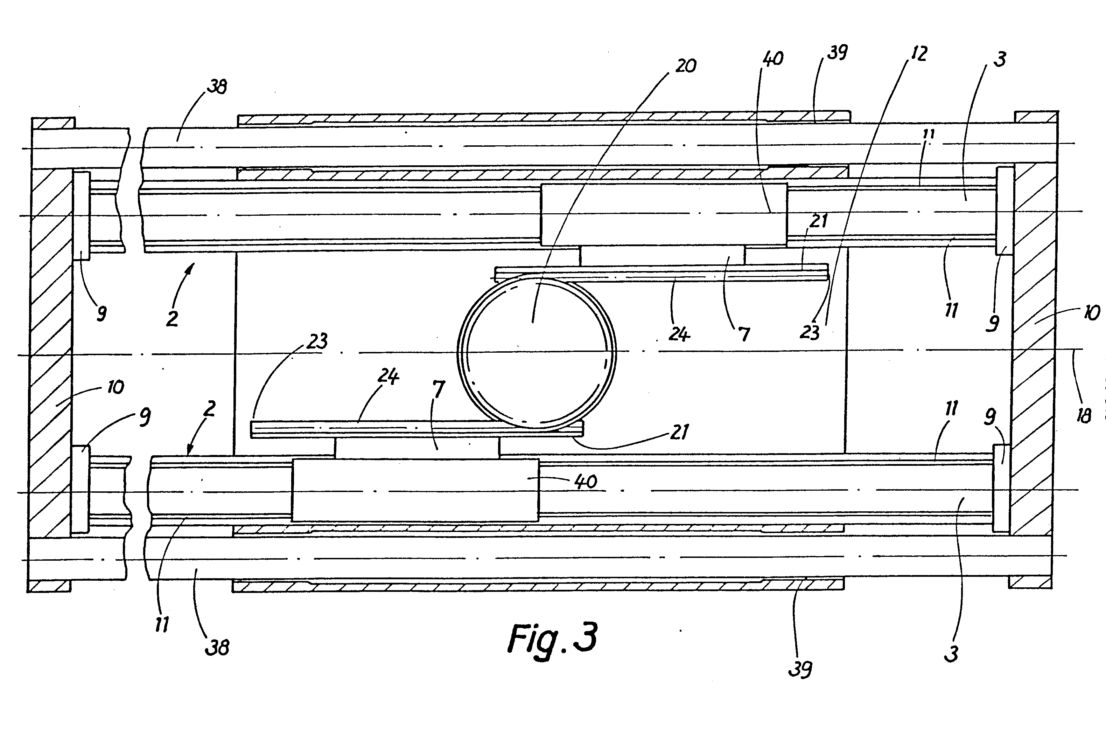

Die in Fig. 3 dargestellte abgewandelte Ausführungsform der neuen Stellvorrichtung entspricht in ihrem Aufbau und in ihrer Wirkungsweise weitgehend jener nach den Fig. 1, 2. Gleiche Teile sind deshalb mit gleichen Bezugszeichen versehen, wobei sich eine nochmalige Erläuterung erübrigt.

Im Gegensatz zu der Ausführungsform nach Fig. 1 ist der in einer Ansicht von unten dargestellte Schlitten 12 in diesem Falle nicht über die Führungsbahnen 11 unmittelbar auf den länglichen Gehäusen 3 der beiden fluidbetätigten linearen Transporteinheiten 2 längsverschieblich gelagert, sondern die beiden Querjoche 10 sind durch zwei achsparallele zylindrische Führungsstangen 38 miteinander verbunden, die im Abstand außerhalb der Gehäuse 3 der beiden Transporteinheiten 2 verlaufen. Der Schlitten 12 ist mit entsprechenden Führungsbohrungen 39 auf den beiden Führungsstangen 38 längsgeführt, so daß die beiden Transporteinheiten 2 von Führungsaufgaben vollkommen entlastet sind. Ihr Kraftübertragungselement 7 ist lediglich über einen bei 40 dargestellten Führungsbügel auf den Führungsbahnen 11 geführt, wie dies im einzelnen in der DE-PS 31 24 915 erläutert ist.

Diese Ausführungsform ist insbesondere dann von Vorteil, wenn der Schlitten 12 größere Druckkräfte auf nehmen muß, beispielsweise weil das mit der Scheibe 16 verbundene angetriebene Maschinenelement ein großes Gewicht aufweist.

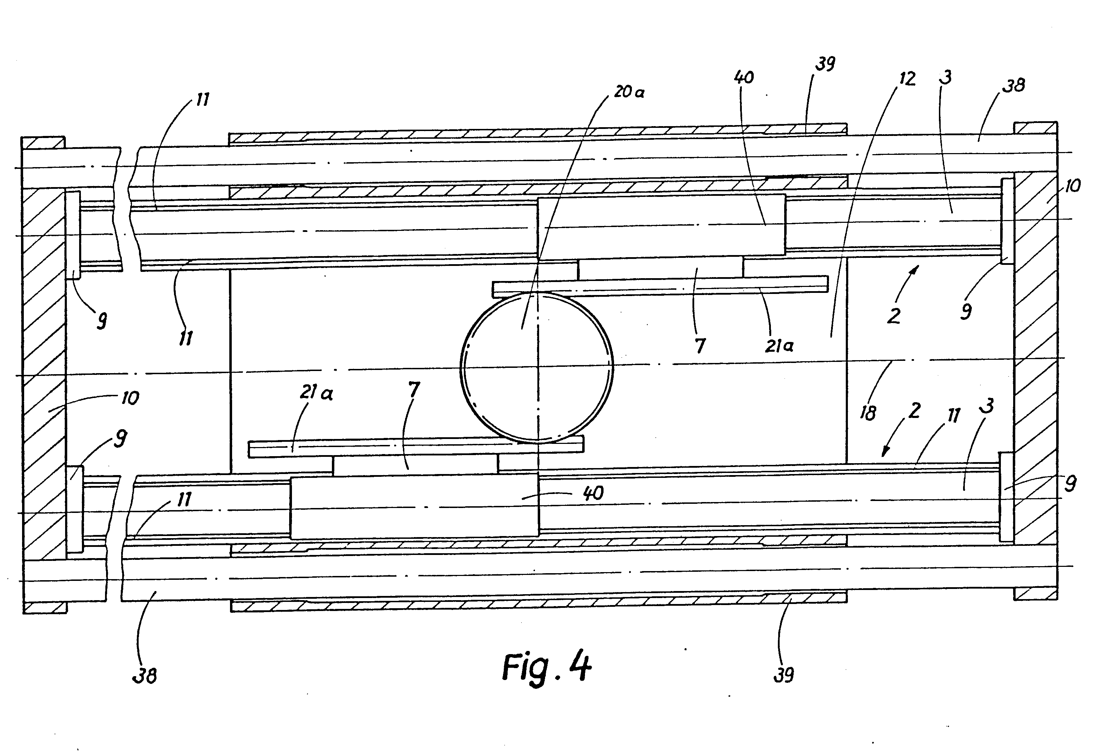

Die Ausführungsform nach Fig. 4 ist ähnlich jener nach Fig. 3; auch hier sind entsprechende Teile mit gleichen Bezugszeichen versehen. Die Funktionsweise ist gleich mit der Ausführungsform nach Fig. 1, so daß sie nicht nochmals erläutert werden muß.

Während aber bei den Ausführungsformen nach Fig. 1, 3 der Schlitten 12 mit den beiden fluidbetätigten linearen Transporteinheiten 2 über Zugmittelgetriebe gekuppelt ist, ist bei der Ausführungsform nach Fig. 4 zu diesem Zwecke ein Zahnstangengetriebe vorgesehen. Das Antriebsrad der Scheibe 16 ist als Ritzel 20a ausgebildet, mit dessen Verzahnung zwei die Antriebsglieder 21 bildende parallel zueinander angeordnete Zahnstangen 21a in Eingriff stehen, die mit den Kraftübertragungsgliedern 7 der beiden fluidbetätigten linearen Transporteinheiten 2 starr verbunden sind. Wie aus Fig. 4 ohne weiteres zu entnehmen, können durch entsprechende Linearbewegung der Zahnstangen 21a beliebige Dreh- und Linearbewegungsverhältnisse der Scheibe 16 und des Schlittens 12 erzielt werden.

Auch bei dieser Ausführungsform kann natürlich alternativ der Schlitten 12 ähnlich wie bei der Ausführungsform nach Fig. 1 unmittelbar auf den Führungsbahnen 11 der Gehäuse 3 der fluidbetätigten Transporteinheiten 2 längsverschieblich geführt sein.

Bei der Ausführungsform nach Fig. 4 kann auch mit einer Antriebsquelle das Auslangen gefunden werden, die lediglich eine einzige lineare Transporteinheit 2 aufweist. In diesem Falle müssen aber in dem Schlitten 12 die beiden Reibungsbremsen 30, 31 (Fig. 1) vorgesehen sein, um den Schlitten 12 auf der Längsführung wahlweise ortsfest verriegeln und lediglich die Scheibe 16 in Umdrehung versetzen bzw. bei drehfest verriegelter Scheibe 16 den Schlitten 12 längsverfahren zu können. Durch entsprechende Betätigung der beiden Reibungsbremsen 30, 31 können auch hier alle die auf den Seiten 19,20 unter a) bis b) geschilderten Bewegungsverhältnisse des Schlittens und des durch die Scheibe 16 gebildeten Antriebselementes erzielt werden.

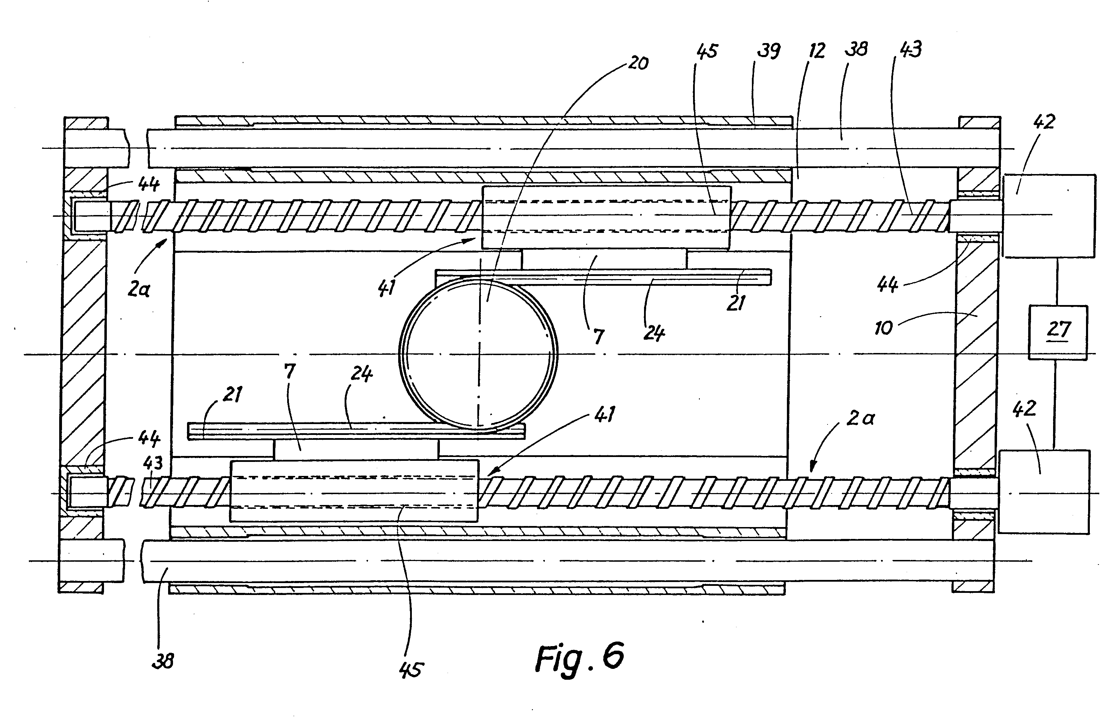

Die Ausführungsform nach Fig. 6 entspricht jener nach Fig. 3 mit dem Unterschied jedoch, daß die beiden linearen Transporteinheiten 2a jeweils als mechanische Lineareinheiten mit einem Spindeltrieb 41 und einem jeweils zugeordneten, eigenen Antriebsmotor 42 ausgebildet sind.

Jede der mechanischen Transporteinheiten 2a weist eine Gewindespindel 43 auf, die beidenends über Lagerbüchsen 44 in den beiden Querjochen 10 drehbar gelagert ist. Die beiden Elektroantriebsmotoren 42 sind mit den zugeordneten Gewindespindeln 43 gekuppelt; sie sitzen auf dem rechten Querjoch 10 und sind von der entsprechend ausgebildeten, in diesem Falle elektrischen Steuereinheit 27 wahlweise ansteuerbar. Auf jede Gewindespindel 43 ist eine Gewindemutter 45 aufgeschraubt, die an dem Schlitten 12 unverdrehbar geführt und mittels eines stegartigen Kraftübertragungselementes 7 mit dem Antriebsglied 21 starr verbunden ist.

Der Antrieb des Antriebsrades 21 erfolgt wieder über ein Zugmittelgetriebe entsprechend Fig. 2. Gleiche Teile sind mit gleichen Bezugszeichen versehen und nicht mehr im einzelnen erläutert.

Durch entsprechende Ansteuerung der beiden Elektromotoren 42 können die auf den Seiten 19,20 unter a) bis c) dargelegten Bewegungsverhältnisse des Schlittens 12 und der mit dem Antriebsrad 20 verbundenen Scheibe 16 beliebig erzielt werden. Da die Spindeltriebe 41 selbsthemmend sind, erübrigt sich in diesem Falle eine zusätzliche Bremseinrichtung für den Schlitten 12 etc.

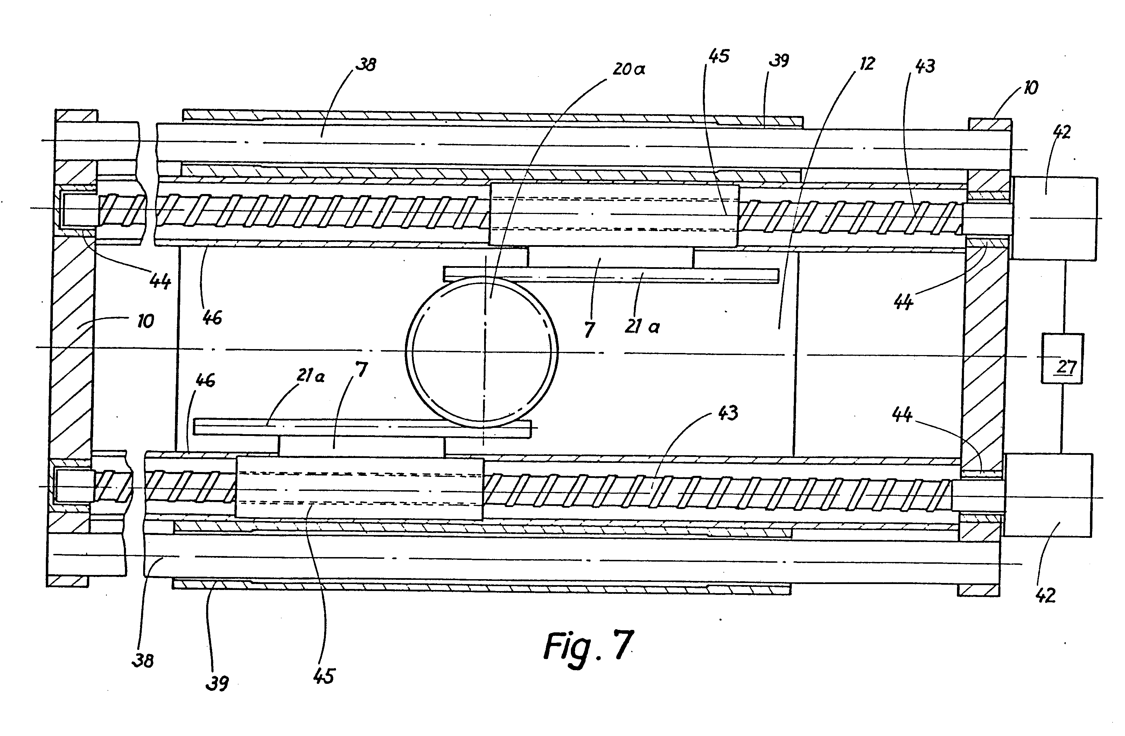

Wie Fig. 7 zeigt, kann die Ausführungsform nach Fig. 6 auch ähnlich jener nach Fig. 4 abgewandelt werden, indem nämlich die die mechanischen linearen Transporteinheiten 2a mit dem Schlitten 12 kuppelnden Getriebe als Zahnstangengetriebe ausgebildet sind. An den Bewegungsverhältnissen ändert sich damit grundsätzlich nichts, so daß sie nicht nochmals erörtert zu werden brauchen. Den Fig. 4 bis 6 entsprechende Teile sind mit gleichen Bezugszeichen versehen; zu ihrer Erklärung wird auf die Beschreibung dieser beiden Figuren verwiesen.

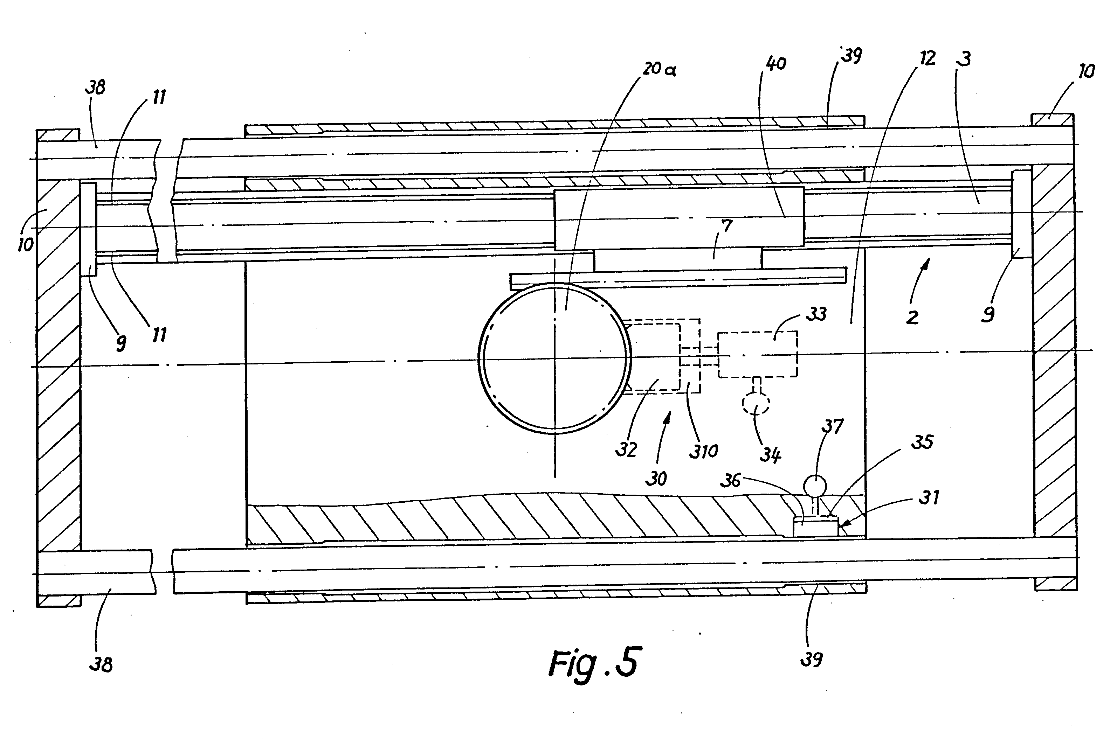

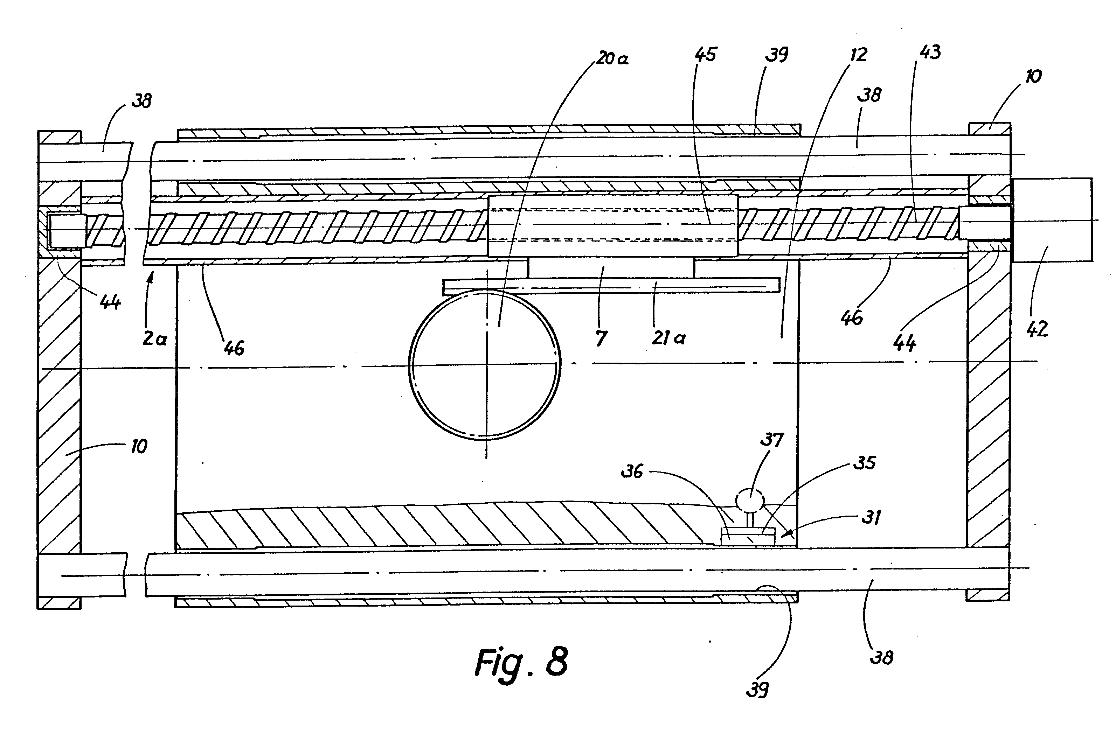

Fig. 8 schließlich zeigt noch eine im Sinne der Fig. 5 abgewandelte Ausführungsform der Anordnung nach Fig. 7. Die Antriebsquelle weist lediglich eine einzige lineare mechanische Transporteinheit 2a auf, die über ein Zahnstangengetriebe mit dem als Ritzel ausgebildeten Antriebsrad 21a gekuppelt ist. Der Schlitten 12 kann durch die Reibungsbremse 31 gegenüber der Längsführung 38 ortsfest verriegelt werden. Wie schon in Fig. 7 angedeutet, ist in diesem Fall die lineare Transporteinheit 2a als eigene selbständige Baueinheit ausgebildet, die ein längliches längsgeschlitzes Gehäuse 46 aufweist, das die Gewindespindel 43 umgibt. Eine solche Baueinheit ist in ihren konstruktiven Einzelheiten beispielsweise in der DE-PS 32 05 143 erläutert, auf die hiermit Bezug genommen wird.

Die Stellvorrichtung wurde im Vorstehenden mit zwei verschiedenen Arten von die Antriebsquelle bildenden linearen Transporteinheiten 2, 2a erläutert. Grundsätzlich können naturgemäß auch andere zweckentsprechende lineare Transporteinheiten Verwendung finden, von denen einige Beispiele in der Beschreibungseinleitung erwähnt wurden. Wesentlich ist nur, daß die Antriebsquelle eben eine Linearbewegung wenigstens eines Antriebsgliedes erzeugt.

Im übrigen kann bei den Ausführungsformen nach den Fig. 7, 8 das Gehäuse 46 der Transporteinheiten 2a ähnlich jenem der fluidbetätigten Transporteinheiten 2 mit Führungsbahnen 11 ausgebildet sein, so daß der Schlitten 12 unmittelbar auf diesen Gehäusen längsgeführt sein kann (vgl. Fig. 1).

Schließlich ist darauf hinzuweisen, daß bei erläuterten Ausführungsbeispielen auf der von den Führungsbahnen 11 bzw. den Führungsstangen 38 gebildeten Längsführung jeweils nur ein einziger Schlitten 12 veranschaulicht ist. Grundsätzlich sind natürlich der Zahl der nebeneinander angeordneten Schlitten 12 lediglich praktische Grenzen gesetzt.

Es wäre auch möglich, bei den mechanischen Transporteinheiten 2a die Gewindespindel 43 jeweils zu unterteilen und den einzelnen Teilen separate Antriebsmotoren 42 zuzuordnen, um damit die Vielfältigkeit der Stellmöglichkeiten der Mehrzahl von auf der Längsführung angeordneten Schlitten 12 noch zu vergrößern.

## Ansprüche

1. Lineare Stellvorrichtung mit einer Längsführung, wenigstens einem auf dieser längsverschieblich gelagerten Schlitten und einer eine Linearbewegung wenigstens eines Antriebsgliedes erzeugenden Antriebsquelle, deren angetriebenes Antriebsglied mit dem Schlitten gekuppelt ist, **dadurch gekennzeichnet**, daß auf der Längsführung (11, 38) wenigstens ein Schlitten (12) mit einem auf ihm um eine schlittenfeste Achse (17) drehbar gelagerten Antriebselement (16) angeordnet ist, dem Einrichtungen (19) zur Abnahme einer Drehbewegung zugeordnet sind, daß das Antriebselement (16) mit dem Antriebsglied (21, 21a) der linearen Antriebsquelle (2, 2a) über ein ihm in Abhängigkeit von der Linearbewegung des Antriebsgliedes eine Drehbewegung um seine Achse (17) erteilendes Getriebe (20, 24; 20a, 21a) gekuppelt ist und daß dem Schlitten (12) wahlweise betätigbare Mittel (27; 30,31) zugeordnet sind, durch die der Schlitten bei angetriebenem Antriebselement (16) gegenüber der Längsführung oder das Antriebselement (16) bei angetriebenem Schlitten (12) gegenüber dem Schlitten (12) jeweils orts- bzw. drehfest verriegelbar ist.

2. Stellvorrichtung nach Anspruch 1, dadurch gekennzeichnet, daß die Längsführung (11; 38) mit der Antriebsquelle (2, 2a),zumindest einem Schlitten (12) sowie zumindest einem Getriebe (20, 24; 20a, 21a) zu einer selbständigen Baueinheit vereinigt ist.

3. Stellvorrichtung nach Anspruch 2, dadurch gekennzeichnet, daß die Längsführung (11; 38) Teil eines Rahmens ist, in dem die Antriebsquelle (2, 2a) aufgenommen ist.

4. Stellvorrichtung nach Anspruch 3, dadurch gekennzeichnet, daß der Rahmen zwei längliche Führungsbahnen (38) und diese endseitig verbindende Querjoche (10) aufweist und die Antriebsquelle (2,2a) in dem Bereich zwischen den Führungsbahnen (38) liegend an den Querjochen (10 gehaltert ist.

5. Stellvorrichtung nach Anspruch 2, dadurch gekennzeichnet, daß die Längsführung (11) zumindest teilweise unmittelbar auf Gehäuseteilen (3) der Antriebsquelle (2, 2a) ausgebildet ist.

6. Stellvorrichtung nach einem der vorhergehenden Ansprüche, dadurch gekennzeichnet, daß die Antriebsquelle zwei selbständige, lineare Transportmittel (2,2a) mit jeweils einem eigenen Antriebsglied (21, 21a) aufweist, daß der Schlitten (12) ein an ihm gelagertes Antriebsrad (20,20a) für das Antriebselement trägt und daß die beiden linearen Transportmittel (2, 2a) beidseitig des Antriebsrades (20,20a) parallel zueinander angeordnet sind und ihre Antriebsglieder (21, 21a) mittels jeweils eines Getriebes mit dem Antriebsrad (20, 20a) gekuppelt sind.

7. Stellvorrichtung nach einem der vorhergehenden Ansprüche, dadurch gekennzeichnet, daß das Getriebe als Zahnstangengetriebe ausgebildet ist, das eine mit dem Antriebsglied der Antriebsquelle (2, 2a) verbundene Zahnstange (21a) und ein auf dem Schlitten (12) gelagertes und mit dem Antriebselement (16) verbundenes oder gekuppeltes Ritzel (20a) aufweist, das durch die Zahnstange (21a) in Umdrehung versetzbar ist.

8. Stellvorrichtung nach Anspruch 6, dadurch gekennzeichnet, daß jedes Getriebe ein Zugmittelgetriebe mit einem das Antriebsrad (20) zumindest teilweise umschlingenden und mit diesem gekuppelten biegsamen Zugmittel (24) ist und daß die das Antriebsrad (20) im entgegengesetzten Sinne umschlingenden beiden Zugmittel (24) endseitig an den beiden Antriebsgliedern (21) verankert sind.

9. Stellvorrichtung nach Anspruch 8, dadurch gekennzeichnet, daß das Zugmittel (24) ein Zahnriemen ist, dessen Verzahnung mit einer entsprechenden Verzahnung (25) des Antriebsrades (20a) in Eingriff steht.

10. Stellvorrichtung nach Anspruch 8 oder 9, dadurch gekennzeichnet, daß jedes Zugmittel (24) zumindest im Bereiche des Antriebsgliedes (21) durch eine seitliche Führung (22) abgestützt ist.

11. Stellvorrichtung nach einem der vorhergehenden Ansprüche, dadurch gekennzeichnet, daß dem Schlitten (12) wahlweise betätigbare Bremsmittel (30,31) zugeordnet sind, durch die das Antriebselement (16) bezüglich des Schlittens (12) und/oder der Schlitten (12) bezüglich der Längsführung (11; 38) feststellbar oder abbremsbar ist.

12. Stellvorrichtung nach Anspruch 11, dadurch gekennzeichnet, daß die Bremsmittel (30, 31) eine reib- oder formschlüssige Bremse aufweisen.

13. Stellvorrichtung nach einem der vorhergehenden Ansprüche, dadurch gekennzeichnet, daß die Antriebsquelle wenigstens eine fluidbetätigte, lineare Transporteinheit (12) mit einem in einem länglichen Gehäuse (3) verschieblichen und mit dem Antriebsglied (21, 21a) gekoppelten Kolben (5) aufweist.

14. Stellvorrichtung nach einem der Ansprüche 1 bis 12, dadurch gekennzeichnet, daß die Antriebsquelle wenigstens eine motorisch angetriebene, lineare Transporteinheit (2a) mit zumindest einer drehbar gelagerten und mit einem Antriebsmotor (42) gekuppelten Gewindespindel (43) eines Spindeltriebs (41) aufweist, dessen Spindelmutter (45) mit dem Antriebsglied (21, 21a) gekoppelt ist.

15. Stellvorrichtung nach Anspruch 14, dadurch gekennzeichnet, daß die Transporteinheit (2a) ein den Spindeltrieb (41) umschließendes längliches Gehäuse (46) aufweist, auf dem gegebenenfalls Führungsbahnen (11) für den Schlitten (12) angeordnet sind.

Fig. 1

Fig. 2

Fig.3

0 283 548

Fig. 4

Fig .5

0 283 548

Fig. 6

0 283 548

Fig. 7

Fig. 8

0 283 548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 204 003 (NORDGREN)<br>* Seite 3, Zeilen 14-34 *<br>--- | 1-3,5,6 ,14 | B 23 Q 1/14<br>F 15 B 15/06 |
| X | FR-A-1 332 673 (CORREZE)<br>* Seite 3, rechte Spalte, Zeile 45 - Seite 4, linke Spalte, Zeile 25 *<br>--- | 1,7,13 | |
| A | GB-A-1 240 607 (GRAHAM)<br>--- | | |
| A | CH-A- 124 572 (ANNEN)<br>--- | | |
| A | FR-A-1 351 795 (TSCHUDIN & HEAD)<br>--- | | |
| A | US-A-3 772 966 (MILLS)<br>--- | | |
| A | US-A-2 916 922 (SORENSEN)<br>----- | | |

**RECHERCHIERTE SACHGEBIETE (Int. Cl.4)**

B 23 Q
F 15 B

Der vorliegende Recherchenbericht wurde für alle Patentansprüche erstellt

| Recherchenort | Abschlußdatum der Recherche | Prüfer |
|---|---|---|
| DEN HAAG | 12-11-1987 | KNOPS J. |